(19) **Europäisches Patentamt / European Patent Office / Office européen des brevets**

(11) **EP 4 049 971 A1**

(12) **EUROPEAN PATENT APPLICATION**
published in accordance with Art. 153(4) EPC

(43) Date of publication:
**31.08.2022 Bulletin 2022/35**

(21) Application number: **21866046.2**

(22) Date of filing: **09.09.2021**

(51) International Patent Classification (IPC):
**C01B 32/21** (2017.01)   **H01M 4/587** (2010.01)
**H01M 10/0525** (2010.01)

(52) Cooperative Patent Classification (CPC):
**C01B 32/21; H01M 4/583; H01M 4/587;
H01M 10/0525;** Y02E 60/10

(86) International application number:
**PCT/CN2021/117482**

(87) International publication number:
**WO 2022/052994 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2020   CN 202010947255**

(71) Applicant: **BTR NEW MATERIAL GROUP CO., LTD.
Shenzhen, Guangdong 518106 (CN)**

(72) Inventors:
 • **ZHOU, Haihui
   Shenzhen, Guangdong 518106 (CN)**

 • **HU, Liangyou
   Shenzhen, Guangdong 518106 (CN)**
 • **PAN, Xiujun
   Shenzhen, Guangdong 518106 (CN)**
 • **LI, Dongdong
   Shenzhen, Guangdong 518106 (CN)**
 • **ZHANG, Dianchen
   Shenzhen, Guangdong 518106 (CN)**
 • **REN, Jianguo
   Shenzhen, Guangdong 518106 (CN)**
 • **HE, Xueqin
   Shenzhen, Guangdong 518106 (CN)**

(74) Representative: **advotec.
   Patent- und Rechtsanwaltspartnerschaft
   Tappe mbB
   Widenmayerstraße 4
   80538 München (DE)**

(54) **GRAPHITE NEGATIVE ELECTRODE MATERIAL, NEGATIVE ELECTRODE, LITHIUM-ION BATTERY AND PREPARATION METHOD THEREFOR**

(57)    The present disclosure provides a graphite anode material, an anode, a lithium ion battery and preparation methods thereof. The graphite anode material includes a natural graphite core, a carbon coating layer, and a graphitizing filler. The natural graphite core has pores. The graphitizing filler is filled in the pores inside the natural graphite core. The graphitizing filler further forms the carbon coating layer. The method includes: mixing natural graphite with a filler, and then pulverizing to obtain a graphite powder body; and graphitizing the graphite powder body in a protective atmosphere to obtain a graphite anode material. The preparation method provided by the present disclosure simultaneously performs spheroidization of natural graphite, mixing and coating of spherical graphite and fillers, and filling in the internal gaps of spherical graphite by fillers, thereby reducing material turnover and residual loss, and achieving simple process and high production efficiency. The anode and lithium ion battery prepared have high first efficiency and excellent cycling performance.

FIG. 1

EP 4 049 971 A1

**Description**

**CROSS-REFERENCE TO RELATED APPLICATIONS**

The present application claims a priority to Chinese Patent Application No. 2020109472554, titled with "GRAPHITE ANODE MATERIAL, ANODE, LITHIUM ION BATTERY AND PREPARATION METHOD THEREOF" and filed on September 10, 2020, the contents of which are incorporated herein by reference in its entirety.

**TECHNICAL FIELD**

The present disclosure belongs to the technical field of energy storage materials, and relates to an anode material, a preparation method thereof and a lithium ion battery, and, in particular, to a graphite anode material, an anode, a lithium ion battery and a preparation method thereof.

**BACKGROUND**

In recent years, lithium-ion batteries have been widely used in 3C products, electric bicycles, energy storage systems, and especially electric vehicles. At present, the anode materials for lithium-ion batteries on the market are mainly carbon anode materials, including soft carbon material, hard carbon material and graphite material. Graphite material is currently the most mature commercialized anode material for lithium-ion batteries.

Graphite materials are divided into two categories: natural graphite and artificial graphite. Natural graphite usually refers to spherical natural graphite. Spherical natural graphite has defects such as high anisotropy, electrolyte selectivity, poor cycles, and high expansion rate. In view of this, improving the cycling performance and expansion rate of natural graphite has always been one of the urgent problems to be solved in natural graphite anode materials.

**SUMMARY**

Based on this, the present disclosure provides a graphite anode material, an anode, a lithium ion battery and preparation methods thereof.

The present disclosure provides a graphite anode material, including:

a natural graphite core, inside of which has pores;
a carbon coating layer formed on a surface of the natural graphite core; and
a graphitizing filler filled in the pores inside the natural graphite core, wherein the graphitizing filler further forms the carbon coating layer.

The present disclosure provides a graphite anode material, and the graphite anode material includes:

a natural graphite core, inside of which has pores filled with a graphite material;
a carbon coating layer formed on a surface of the natural graphite core;
wherein the graphite material and the carbon coating layer are both formed by graphitizing a filler to obtain a graphitizing filler. In some embodiments, the graphite core has a median particle size ranging from 8 $\mu$m to 25 $\mu$m.

In some embodiments, the carbon coating layer has a thickness ranging from 10 nm to 100 nm.

The pores have a pore volume ranging from 0.01 cm$^3$/g to 0.08 cm$^3$/g.

In some embodiments, based on 100% of a total mass of the graphitizing filler, the content of the graphitizing filler filled in the pores inside the natural graphite core ranges from 20% to 80%.

In some embodiments, the graphite anode material has an average pore volume ranging from 0.005 cm$^3$/g to 0.010 cm$^3$/g.

In some embodiments, a ratio of the macro-pores of the graphite anode material ranges from 80% to 90%, and the pore diameter of the macro-pores is greater than or equal to 50 nm.

In some embodiments, an O/C ratio of the O atomic concentration to the C atomic concentration of the graphite anode material ranges from 0.02 to 0.04.

In some embodiments, the filler includes at least one of pitch, resin, grease, alkanes, alkenes, alkynes, and aromatic hydrocarbons.

The present disclosure provides a method for preparing a graphite anode material. The method includes following steps:

mixing natural graphite with a filler to obtain a mixture;
pulverizing and spheroidizing the mixture to obtain a graphite powder body filled with the filler; and
graphitizing the graphite powder body to obtain the graphite anode material.

In some embodiments, the natural graphite includes natural flake graphite.

In some embodiments, the natural graphite has a median particle size (D50) ranging from 10 $\mu$m to 150 $\mu$m.

In some embodiments, the filler includes an organic carbon source with a residual carbon value of 10% to 90% by mass, which can be melted into liquid at 60°C to 350°C.

In some embodiments, the organic carbon source includes at least one of pitch, resin, grease, alkanes, alkenes, alkynes, and aromatics.

In some embodiments, the filler has a particle size ranging from 0.5 $\mu$m to 10 $\mu$m.

In some embodiments, the pitch includes at least one of petroleum pitch, coal pitch, meso-phase pitch, and modified pitch.

In some embodiments, the pitch has a median particle size ranging from 1 $\mu$m to 10 $\mu$m.

In some embodiments, the resin includes phenolic resin and/or epoxy resin.

In some embodiments, a mass ratio of the natural graphite to the filler is 10: (0.5-3).

In some embodiments, the graphite powder body has a median particle size ranging from 8 $\mu$m to 25 $\mu$m.

In some embodiments, the graphite powder body is a spherical graphite powder body.

In some embodiments, the graphitizing is performed under a protective atmosphere, and the protective atmosphere includes an atmosphere other than an oxygen environment.

In some embodiments, the protective atmosphere includes at least one of a nitrogen atmosphere and an argon atmosphere.

In some embodiments, the temperature of the graphitizing treatment ranges from 2000°C to 3300°C, and the time ranges from 10 h to 72 h.

In some embodiments, the preparation method further includes: dispersing and sieving the product obtained by the graphitizing treatment.

In some embodiments, the method includes following steps:

physically mixing natural flake graphite with a median particle size of 10 $\mu$m to 150 $\mu$m and pitch with a median particle size of 1 $\mu$m to 10 $\mu$m at a mass ratio of 10: (0.5-3) to obtain a mixture;

pulverizing and spheroidizing the mixture to obtain a spherical graphite powder body with a median diameter of 8 $\mu$m to 25 $\mu$m; and

graphitizing the spherical graphite powder body under a protective atmosphere at a temperature of 2000°C to 3300°C for 10 h to 72 h to obtain the graphite anode material.

The present disclosure provides a lithium ion battery including the graphite anode material or the graphite anode material prepared by the preparation method.

## BRIEF DESCRIPTION OF DRAWINGS

In order to more clearly illustrate technical solutions of embodiments of the present disclosure, the accompanying drawings used in the embodiments are briefly described below. It should be understood that following drawings only exemplarily illustrate the embodiments of the present disclosure, and the size ratios in the drawings do not directly correspond to the actual ratios of the embodiments. Meanwhile, the drawings described below are merely a part of the embodiments of the present disclosure, and therefore should not be regarded as limitation for scope.

FIG. 1 is a SEM section test photograph of a graphite anode material prepared in Example 1 of the present disclosure;

FIG. 2 is a SEM section test photograph of spherical graphite made only by spheroidizing natural graphite materials used in the embodiments of the present disclosure;

FIG. 3 is a SEM section test photograph of a graphite anode material prepared in Comparative Example 1 of the present disclosure;

FIG. 4 is a structural schematic diagram of a section of a graphite anode material provided by some embodiments of the present disclosure;

FIG. 5 is a structural schematic diagram of a section of a cathode provided by some embodiments of the present disclosure; and

FIG. 6 is a schematic diagram of a battery provided by some embodiments of the present disclosure.

Reference signs: 100-graphite anode material; 120-natural graphite core; 122-pore; 140-carbon coating layer; 200-battery; 220-positive electrode; 240-anode; 242-anode current collector; 244-anode active material layer; 260-electrolyte; 280-diaphragm; 290-shell.

**DESCRIPTION OF EMBODIMENTS**

In order to better illustrate the present disclosure and facilitate the understanding of technical solutions of the present disclosure, the present disclosure will be further described in detail below. However, following embodiments are only simple examples of the present disclosure, which do not represent or limit the protection scope of the present disclosure. The protection scope of the present disclosure is limited by claims. It should be noted that, in the case of no conflict, the features in the embodiments of the present disclosure can be combined with each other.

A method for preparing a graphite anode material provided by some embodiments of the present disclosure can prepare a natural graphite anode material with a dense structure having no internal gap defects.

**I. Graphite anode material**

In an embodiment, a graphite anode material 100 is provided. The graphite anode material 100 includes:

a graphite core, inside of which pores 122 are located;
a graphitizing filler, the graphitizing filler is filled in the pores 122 inside the graphite core. In some embodiments, the graphite anode material 100 further includes a carbon coating layer 140, and the carbon coating layer 140 is disposed on the surface of the natural graphite core 120. In some embodiments, the carbon coating layer 140 includes a graphitizing filler. In some embodiments, the carbon coating layer 140 is formed of a graphitizing filler. In some embodiments, the graphite core includes or consists of natural graphite.

In some embodiments, the graphite anode material 100 includes:

a natural graphite core 120, inside of which pores 122 are located; the pores 122 are filled with a graphite material;
a carbon coating layer 140 formed on a surface of the natural graphite core 120;
in which, the graphite material and the carbon coating layer 140 are both formed by a graphitizing filler, and the graphitizing filler is obtained by graphitization of a filler.

In some embodiments, a graphite anode material 100 is provided. The graphite anode material 100 includes:

a natural graphite core 120, inside of which pores 122 are located;
a carbon coating layer 140 formed on a surface of the natural graphite core 120;
a graphitizing filler, the graphitizing filler is filled in the pores 122 inside the natural graphite core 120; and the graphitizing filler further forms a carbon coating layer 140.

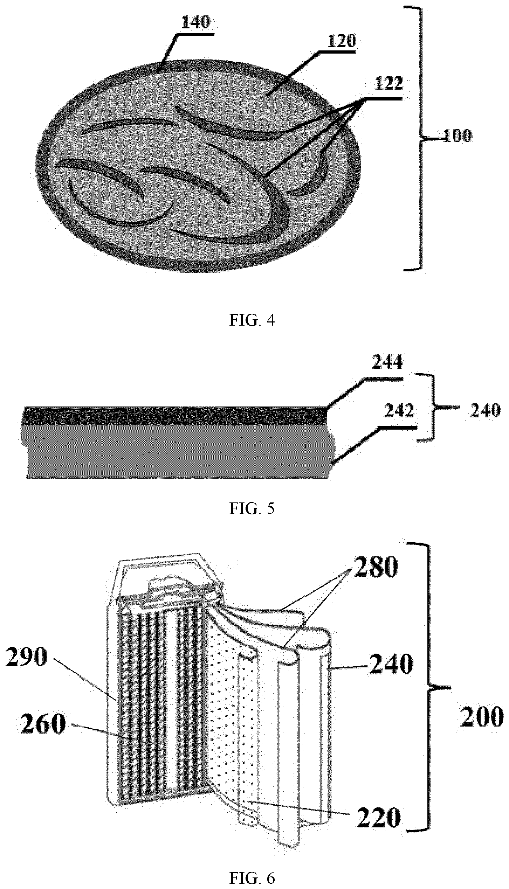

The pores 122 in the graphite core 120 of the graphite anode material 100 provided by the embodiments of the present disclosure are filled with the graphitizing filler, an external coating structure realizes internal densification, so that the internal defects of natural graphite are eliminated, thereby having low material expansion, good cycling performance and excellent overall performances. The problem of selectivity of natural graphite and electrolyte is addressed, thereby further improving the cycling performance of natural graphite. By filling the internal pores of natural graphite with fillers and surface coating, it not only completely solves the problem of the selectivity of natural graphite and electrolyte and improves the cycling performance of natural graphite, but also simplifies the process steps and reduces the turnover and residual loss of materials, thereby reducing the production cost and having high production efficiency. As shown in FIG. 4, the defects of pores inside the graphite core of the graphite anode material 100 provided by this embodiment are filled with the graphitizing filler, which realizes internal densification, and eliminates the internal defects of natural graphite and the internal defects of pores present in the spheroidizing process while pulverizing the graphite, thereby achieving low material expansion and good cycling performance. In addition, the graphitizing filler further forms the carbon coating layer 140 on the surface of the natural graphite core 120 to form the external coating structure, which cooperates with internal densification structure together to reduce the expansion rate of the material, so that the cycling performance of the electrode is more excellent and the overall performance is even better, which solves the problem of the selectivity of natural graphite and electrolyte to a certain extent, thereby improving the cycling performance of natural graphite.

(A) Graphite core

In some embodiments, a median particle size of the natural graphite core 120 ranges from 8 $\mu$m-25 $\mu$m, including but not limited to 8 $\mu$m, 10 $\mu$m, 15 $\mu$m, 20 $\mu$m, or 25 $\mu$m.

(B) Graphitizing filler and coating layer

In some embodiments, the filler includes at least one of pitch and resin. In some embodiments, the filler includes at least one of graphitizing pitch and graphitizing resin. In some embodiments, the filler includes at least one of pitch, resin, grease, alkanes, alkenes, alkynes, and aromatic hydrocarbons.

In some embodiments, the graphitizing filler is filled in the pores 122 inside the graphite core 120.

As shown in FIG. 4, the graphitizing filler is filled in the pores 122 inside the graphite core 120. The graphite anode material 100 further includes a carbon coating layer 140, which is disposed on the surface of the natural graphite core. The carbon coating layer 140 is formed of a graphitizing filler. In other words, the material in the pore 122 inside the graphite core 120 is the same as the material of the carbon coating layer 140, both of which are made of the graphitizing filler.

In some embodiments, the coating layer has a thickness ranging from 10 nm to 100 nm, including but not limited to 10 nm, 20 nm, 30 nm, 40 nm, 50 nm, 60 nm, 70 nm, 80 nm, 90 nm, or 100 nm. Cooperating with the internal densification structure of this embodiment, the thickness of the coating layer in the range of 10 nm to 100 nm can better improve the cycling performance of the battery.

In some embodiments, the graphitizing filler has a particle size ranging from 0.5 $\mu$m to 10 $\mu$m, including but not limited to 0.5 $\mu$m, 1 $\mu$m, 3 $\mu$m, 5 $\mu$m, 7 $\mu$m, 9 $\mu$m, and 10 $\mu$m.

In some embodiments, the pore 122 has a pore volume ranging from 0.01 $cm^3/g$ to 0.08 $cm^3/g$, including but not limited to 0.01 $cm^3/g$, 0.03 $cm^3/g$, 0.05 $cm^3/g$, 0.07 $cm^3/g$, 0.08 $cm^3/g$. Such a parameter configuration enables the graphitizing filler to completely fill the pores 122 inside the natural graphite to form an internal dense structure.

In some embodiments, a ratio of macro-pores in the natural graphite core ranges from 92% to 98%, and there are more pores inside the natural graphite core. In some embodiments, a ratio of macro-pores in the natural graphite core ranges from 94% to 96%. It should be noted that the ratios of the macro-pores of the natural graphite core here is based on the structure of the natural graphite core 120 in the graphite anode material 100 in which the graphitizing filler is removed.

It should be noted that the above macro-pores refer to pores with a pore diameter greater than or equal to 50 nm.

In some embodiments, the graphite anode material 100 has an average pore volume ranging from 0.005 $cm^3/g$ to 0.010 $cm^3/g$, for example, 0.005 $cm^3/g$, 0.006 $cm^3/g$, 0.007 $cm^3/g$, 0.008 $cm^3/g$, 0.009 $cm^3/g$ or 0.010 $cm^3/g$. The pore volume of the graphite anode material 100 of the present disclosure is reduced, so that the side reactions of the material can be reduced during the cycling process, thereby improving the cycling performance of the material.

In some embodiments, a ratio of macro-pores in the entire graphite anode material 100 ranges from 80% to 90%. In some embodiments, a ratio of macro-pores in the entire graphite anode material 100 may be, for example, 80%, 82%, 83%, 84%, 85%, 86%, 87%, 88%, 89% or 90%. Compared with the natural graphite core 120, the volume of macro-pores in the graphite anode material 100 according to the present disclosure is much lower, indicating that the pores in the graphite anode material prepared by the method of the present disclosure are effectively filled with the graphitizing filler, which can improve the cycling performance of the materials.

In some embodiments, based on 100% of the total mass of the graphitizing filler, the amount of the graphitizing filler filled in the pores 122 inside the natural graphite core 120 ranges from 20% to 80%, including but not limited to 20%, 30%, 40%, 50%, 60%, 70% or 80%. Within the range of 20% to 80% by mass, the filler can fill the pores in the graphite densely without greatly reducing the capacity. If the amount of graphitizing filler is excessively small, the pores 122 inside the graphite may not be completely filled. If the amount of graphitizing filler is excessively large, it may cause negative effects such as lower material capacity and lower compaction.

In some embodiments, the atomic concentration of O and C obtained according to the spectral peak areas of Cls and Ols by X-ray photoelectron spectroscopy, an O/C value, i.e., a ratio of the atomic concentration of O to the atomic concentration of C of the graphite anode material, ranges from 0.02 to 0.04. In some embodiments, the O/C value of the graphite anode material may be, for example, 0.02, 0.022, 0.025, 0.027, 0.030, 0.032, 0.035, 0.037, 0.039 or 0.04. A low O/C value indicates that the material of the present disclosure has a low oxygen content, indicating fewer oxygen-containing functional groups, and reduced side reactions during the cycling process, which is beneficial to improving the cycling performance of the material.

**II. Preparation of graphite anode material**

In an embodiment, a method for preparing a graphite anode material 100 is provided. The method includes following steps: graphitizing graphite powder body bodies in a protective atmosphere to obtain a graphite anode material 100;

in which the graphite powder body bodies include: a natural graphite core 120, inside of which pores 122 are located; and a filler filled in the pores 122 inside the natural graphite core 120.

In some embodiments, a method for preparing the graphite anode material 100 is provided. The method includes following steps:

> pulverizing a mixture of natural graphite and a filler to obtain a graphite powder body; and
> graphitizing the graphite powder body under a protective atmosphere to obtain a graphite anode material 100.

In some embodiments, a method for preparing the graphite anode material 100 is provided. The method includes following steps:

> mixing natural graphite with a filler to obtain a mixture;
> pulverizing and spheroidizing the mixture to obtain a graphite powder body, the pores of the graphite powder body are filled with the filler, and
> graphitizing the graphite powder body to obtain a graphite anode material 100.

In some embodiments, a method for preparing a graphite anode material 100 is provided. The method includes following steps:

> mixing natural graphite with a filler to obtain a mixture;
> pulverizing and spheroidizing the mixture to obtain a graphite powder body; and
> graphitizing the graphite powder body under a protective atmosphere to obtain a graphite anode material 100.

In the preparation method provided by the present disclosure, in the raw material preparation stage, it is possible to mix the natural graphite and the filler uniformly, and then in the process of pulverizing and spheroidizing, the solid filler is embedded in the natural graphite particles, and then undergoes graphitizing treatment. The filler embedded in the natural graphite particles can eliminate the defects in the natural graphite particles and form a dense structure, thereby improving the performance of the product.

In the method provided by the present disclosure, after the natural graphite and the filler are uniformly mixed, in the process of pulverizing and spheroidizing, the filler is embedded in the graphite while the outer surface of the natural graphite is also coated. After heat treatment, a densification inside and external coated structure is formed, which eliminates the internal defects of natural graphite, completely solves the problem of selectivity of natural graphite and electrolyte, thereby improving the cycling performance of natural graphite.

The preparation method provided by the present disclosure simultaneously performs spheroidization of natural graphite, mixing and coating of spherical graphite and fillers, and filling in the internal gaps of spherical graphite by fillers, thereby reducing material turnover and residual loss, and achieving simple process and high production efficiency. Natural graphite and the filler are mixed together for pulverization and spheroidization, so that a large number of gap defects in a single flake graphite pulverized and spheroidized can be eliminated, thereby forming an internal dense structure, and achieving small material expansion, good cycling, and excellent overall performance.

### Graphite

In some embodiments, graphite may be natural graphite. In some embodiments, natural graphite includes, but is not limited to, natural flake graphite.

In some embodiments, natural graphite has a median particle size D50 ranging from 10 $\mu$m to 150 $\mu$m, including but not limited to 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m or 150 $\mu$m. However, it is not limited to the listed values, other unlisted values within this range are also applicable.

### Filler

As used herein, the term "filler" refers to a filler that can be filled into the pores 122 inside the graphite core and graphitized. In this context, the term "filler" may also be referred to as "graphitizable filler". Examples of fillers include, but are not limited to, organic carbon sources.

In some embodiments, the filler includes an organic carbon source that has a residual carbon value of 10% to 90% by mass and can be melted into liquid at 60°C to 350°C.

In some embodiments, the organic carbon source includes at least one of pitch, resin, grease, alkanes, alkenes, alkynes, and aromatics.

In some embodiments, the pitch includes, but is not limited to, at least one of petroleum pitch, coal pitch, mesophase pitch, modified pitch, natural pitch, shale pitch, and wood pitch.

In some embodiments, the resin includes, but is not limited to, at least one of phenolic resin, epoxy resin, furfural-acetone resin, furan resin, polyethylene, polypropylene, and polybutene.

In some embodiments, the grease includes, but is not limited to, at least one of petroleum, diesel, and lubricating oil.

In some embodiments, alkanes include, but are not limited to, at least one of alkanes and cycloalkanes.

In some embodiments, aromatic hydrocarbons include, but are not limited to, at least one of monocyclic aromatic hydrocarbons and polycyclic aromatic hydrocarbons.

In some embodiments, the filler may be a filler which can be melted into liquid at a temperature of 60°C to 350°C, or 70°C to 300°C, or 80°C to 250°C, or 85°C to 245°C, or 90°C to 240°C; for example, 60°C, 70°C, 80°C, 90°C, 100°C, 110°C, 120°C, 130°C, 140°C, 150°C, 160°C, 170°C, 180°C, 190°C, 200°C, 210 °C, 220°C, 230°C, 240°C, 250°C, 260°C, 270°C, 280°C, 290°C, 300°C, 310°C, 320°C, 330°C, 340°C or 350°C. The filler may have a fixed melting point. The filler may not have a fixed melting point. For example, the filler may have a melting range. In some embodiments, the filler has a melting range of $\leq 40°C$, $\leq 30°C$, $\leq 20°C$, or $\leq 15°C$. In some embodiments, the filler has a softening point of 195°C to 220°C, 198°C to 215°C, or 200°C to 210°C.

In some embodiments, the filler can have a residual carbon value of 10% to 90%, 20% to 85%, 30% to 80%, 40% to 75%, 50% to 70%, or 60% to 65% by mass; for example, 10%, 15%, 20%, 25%, 30%, 35%, 40%, 45%, 50%, 55%, 60%, 65%, 70%, 75%, 80%, 85%, 90% or 95% by mass.

In some embodiments, the filler includes pitch and/or resin. Without being bound by theory, it is believed that pitch and resin are solid powders at room temperature (for example, 25°C). The pitch and resin can enter the pores 122 inside the spherical graphite during the process of pulverizing and spheroidizing the graphite, melt into liquid to fill and then solidify into a solid state, so that it not only can eliminate the internal defects inside natural graphite by internal densification, but also can form a carbon structure coating layer on the outer surface to prevent natural graphite from directly contacting the electrolyte, thereby improving performance of products.

In some embodiments, the filler includes, but is not limited to, a solid powder filler or a semi-solid filler.

In some embodiments, the pitch includes at least one of petroleum pitch, coal pitch, meso-phase pitch, and modified pitch. In some embodiments, the pitch includes at least one of natural pitch, shale pitch, and wood pitch. Typical but non-limiting combinations are: a combination of petroleum pitch and coal pitch, a combination of coal pitch and meso-phase pitch, and a combination of meso-phase pitch and modified pitch. Typical but non-limiting combinations are: a combination of petroleum pitch, wood pitch and meso-phase pitch, a combination of coal pitch, meso-phase pitch and natural pitch, and a combination of petroleum pitch, coal pitch and shale pitch.

In some embodiments, the pitch has a median particle diameter D50 ranging from 1 µm to 10 µm, including but not limited to, 1 µm, 2 µm, 3 µm, 4 µm, 5 µm, 6 µm, 7 µm, 8 µm, 9 µm, or 10 µm, which is not limited to the listed values, other unlisted values within this value range are also applicable.

In some embodiments, the resin includes phenolic resin and/or epoxy resin.

In some embodiments, a mass ratio of natural graphite to filler is 10:(0.5 to 3), including but not limited to 10:0.5, 10:0.8, 10:1, 10:1.2, 10:1.4, 10:1.6, 10:1.8, 10:2, 10:2.2, 10:2.4, 10:2.6, 10:2.8 or 10:3, which is not limited to the listed values, other unlisted values within this range are also applicable.

In this embodiment, the mass ratio of natural graphite to filler is in the range of 10: (0.5-3), which realizes the complete filling of the graphite gap without reducing the capacity of the material. If the mass ratio of natural graphite to filler is excessively large (that is, there are few filler), the pores 122 inside the graphite cannot be completely filled. If the mass ratio of natural graphite to filler is excessively small (that is, there are much filler), it may lead to negative effects such as lower material capacity and lower compaction.

## Mixing

In some embodiments, a method for preparing the graphite anode material 100 includes: mixing natural graphite with a filler to obtain a mixture.

## Pulverizing/spheroidizing

In some embodiments, a method for preparing the graphite anode material 100 includes: pulverizing and/or spheroidizing the mixture including graphite and filler to obtain a graphite powder body. In some embodiments, a method for preparing the graphite anode material 100 includes: pulverizing a mixture including graphite and a filler to obtain a graphite powder body. In some embodiments, a method for preparing the graphite anode material 100 includes: pulverizing the mixture to obtain a graphite powder body.

In some embodiments, the spheroidizing is performed by a mechanical pulverizer.

In some embodiments, the graphite powder body has a median particle size D50 ranging from 8 µm to 25 µm, including but not limited to 8 µm, 10 µm, 12 µm, 14 µm, 16 µm, 18 µm, 20 µm, 22 µm, 24 µm, or 25 µm, which is not limited to the listed values, other unlisted values within this range are also applicable.

In some embodiments, if the median particle size of the graphite powder body obtained after pulverization and spherification is excessively large, the Dmax (the particle diameter of the largest particle in the material) of the material may be excessively large, and the separator may be pierced during a battery preparation process, so that short-circuit of the battery occurs. If the median particle size of the graphite powder body obtained after pulverization and spherification is excessively small, the spherical graphite may have a low yield and a high cost.

In some embodiments, the graphite powder body is a spherical graphite powder body.

## Graphitizing

In some embodiments, a method for preparing the graphite anode material 100 includes: graphitizing the graphite powder body to obtain the graphite anode material 100. In some embodiments, graphitizing can be performed in a protective atmosphere.

In some embodiments, the protective atmosphere includes an atmosphere other than oxygen environment.

Preferably, the atmosphere other than oxygen environment includes at least one of a vacuum atmosphere, a hydrogen atmosphere, a nitrogen atmosphere, a helium atmosphere, a neon atmosphere, an argon atmosphere, a krypton atmosphere, and a xenon atmosphere.

In some embodiments, the protective atmosphere includes a nitrogen atmosphere and/or an argon atmosphere.

In some embodiments, the temperature of graphitizing treatment ranges from 2000°C to 3300°C, including but not limited to 2000°C, 2100°C, 2200°C, 2300°C, 2400°C, 2500°C, 2600°C, 2700°C, 2800°C, 2900°C, 3000°C, 3100°C, 3200°C, or 3300°C, which is not limited to the listed values, other unlisted values within this range are also applicable. It is more conducive to the effective conversion of fillers into graphite in the temperature range of 2000°C to 3300°C.

In some embodiments, the time of graphitizing treatment ranges from 10 h to 72 h, including but not limited to 10 h, 15 h, 20 h, 25 h, 30 h, 35 h, 40 h, 45 h, 50 h, 55 h, 60 h, 65 h, 70 h or 72 h, which is not limited to the listed values, other unlisted values within this range are also applicable.

In some embodiments, a mixing time of natural graphite and filler before pulverizing is 10 min to 60 min, including but not limited to 10 min, 15 min, 20 min, 25 min, 30 min, 35 min, 40 min, 45 min, 50 min, 55 min, 60 min. The mixing time in the range of 10 min to 60 min can make the filler and natural graphite mix more uniformly, so that the filler can better coat the surface of natural graphite and infiltrate to the pores of graphite through the graphite gap, thereby forming the initial filling of the pores of graphite.

In some embodiments, the preparation method further includes: dispersing and sieving the product obtained by the graphitizing treatment. In some embodiments, a method for preparing lithium-nickel-cobalt composite oxide includes following steps:

physically mixing natural flake graphite with a median particle size of 10 $\mu$m to 150 $\mu$m and pitch with a median particle size of 1 $\mu$m to 10 $\mu$m at a mass ratio of 10: (0.5 to 3) to obtain a mixture;

pulverizing and spheroidizing the mixture to obtain spherical graphite powder body with a median diameter of 8 $\mu$m to 25 $\mu$m; and

graphitizing the spherical graphite powder body under a protective atmosphere at a temperature of 2000 °C to 3300 °C for 10 h to 72 h to obtain a graphite anode material 100. However, at least in some embodiments, the mixing time of natural graphite and filler ranges from 10 min to 60 min.

The above optional technical solution adopts both flake graphite and filler (e.g., pitch) to be mixed together for pulverization and spheroidization. In the process of pulverization and spheroidization, the flake graphite is curled and folded, and the filler such as pitch is embedded inside the spherical graphite while covering on the outer layer of the spherical graphite. Flake graphite and filler such as pitch are pulverized and spheroidized together, so that a large number of gap defects can be eliminated in the single flake graphite pulverized and spheroidized while realizing uniform coating of the outer layer of the spherical graphite by filler such as pitch. Therefore, the expansion rate of natural graphite is reduced while improving cycling performance.

## III. Anode material and anode

The graphite anode material 100 may be used as an anode active material, for example, an anode active material of a lithium ion battery. An embodiment provides an anode material that includes the graphite anode material 100 described above.

In some embodiments, the anode material further includes a binder.

In some embodiments, the anode material further includes a conductive agent. In some embodiments, the anode material includes the graphite anode material described above, a binder, and a conductive agent.

In some embodiments, the anode material further includes graphite. In some embodiments, the anode material includes the graphite anode material described above, a binder, a conductive agent, and graphite.

An embodiment provides a method for preparing an anode material, including mixing the above components.

An embodiment provides a method for preparing an anode material, including: mixing the graphite anode material 100, a conductive agent, and a binder. An embodiment provides a method for preparing an anode material, including: mixing the graphite anode material 100, a conductive agent, a binder, and graphite.

An embodiment provides an anode 240 that includes the graphite anode material 100.

In some embodiments, the anode includes: an anode current collector 242 and an anode material layer 244 on the anode current collector 242. The anode material layer 244 includes the anode material described above.

An embodiment provides a method for preparing the anode 240, including: coating a slurry including an anode material on the anode current collector 242.

As shown in FIG. 5, in some embodiments, an anode is provided, including: a anode current collector 242 and an anode active material layer 244 on the anode current collector 242. The anode active material layer 244 includes the graphite anode material 100 described above. In some embodiments, the anode active material layer 244 further includes a conductive agent and a binder. In some embodiments, the anode active material layer 244 further includes graphite.

In some embodiments, a mass ratio among the graphite anode material 100, the conductive agent, and the binder is (93 to 98): (1.0 to 2.0): (1.0 to 5.0).

In some embodiments, a method for preparing the anode 240 is provided, including: applying a slurry including a silicon-oxygen composite anode material on the anode current collector (242) to form an anode active material layer on the anode current collector (242); and drying the anode active material layer.

In some embodiments, the drying may be vacuum drying. In some embodiments, a total solid content of the slurry ranges from 30% to 60%. In some embodiments, a total solid content of the graphite anode material 100, the conductive agent and the binder in the slurry ranges from 30% to 60%. In some embodiments, a total solid content of the graphite anode material 100, the conductive agent, the binder, and the graphite in the slurry ranges from 30% to 60%.

In some embodiments, before applying the slurry on the anode current collector (242), following steps are included: dispersing the components (e.g., the graphite anode material 100, the conductive agent, the binder, and optionally graphite) of the anode active material layer in a solvent to form a slurry.

In some embodiments, the anode current collector 242 may be a metal. In some embodiments, the anode current collector 242 includes, but is not limited to, a copper foil current collector.

The slurry may contain a solvent. In some embodiments, the solvent includes, but is not limited to, water.

The binder can improve the binding properties of the anode active material particles with each other and with the current collector 242. In some embodiments, the binder includes at least one of a non-aqueous binder or an aqueous binder. Non-aqueous binders include, but are not limited to, at least one of polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, polyamideimide, or polyimide. The aqueous binder includes, but is not limited to, at least one of a rubber-based binder or a polymer resin binder.

The conductive agent can improve the conductivity of the electrode. The conductive agent includes, but are not limited to, materials with high conductivity, such as gold, copper, nickel, aluminum, silver, and/or similar metal powders or metal fibers and/or similar metal-based materials; or natural graphite, artificial graphite, carbon black, acetylene black, Ketjen black, carbon fiber and/or similar carbon-based materials; or polyphenylene derivatives and/or similar conductive polymers; and/or mixtures thereof.

## IV. Lithium-ion battery

In an embodiment, a lithium ion battery 200 is provided. The lithium ion battery 200 includes the graphite anode material 100.

In some embodiments, the lithium ion battery 200 includes a graphite anode material 100 prepared by the preparation method.

The lithium ion battery 200 in some embodiments may include a positive electrode 220, an anode 240, and an electrolyte 260.

In some embodiments, the lithium ion battery 200 includes: a positive electrode 220; an anode 240; and an electrolyte 260. The anode 240 has an anode active material layer on the anode current collector 242. The anode active material layer includes a graphite anode material 100.

As shown in FIG. 6, in some embodiments, the lithium ion battery 200 may include a separator 280 disposed between the positive electrode 220 and the anode 240. The membrane 280 may be a polymer microporous membrane, such as a polypropylene microporous membrane. The diaphragm 280 may be commercially available.

In some embodiments, the lithium ion battery 200 may include a shell 290. The positive electrode 220, the anode 240, the separator 280, and the electrolyte 260 may be contained in the shell 290.

In some embodiments, the lithium ion battery may be a cylindrical battery, a square battery, or a coin battery. Lithium-ion batteries can be rigid-shell batteries or soft-pack batteries.

In some embodiments, the positive electrode 220 may include a positive electrode current collector and a positive electrode active material layer provided on the positive electrode current collector. The positive electrode active material layer includes a positive electrode active material capable of reversibly intercalating and de-intercalating lithium ions. Examples of the positive electrode active material include, but are not limited to, one of $LiCoO_2$, $LiNiO_2$, $LiMnO_2$, $LiMn_2O_4$, $LiNi_{1-x-y}Co_xMn_yO_2$ ($0 \leq x \leq 1$, $0 \leq y \leq 1$, $0 \leq x+y \leq 1$), or lithium-transition metal oxides.

In some embodiments, the electrolyte 20 includes, but is not limited to, a non-aqueous organic solvent, such as at least one of carbonate, ester, ether, or ketone. In some embodiments, the carbonate includes, but are not limited to, at least one of dimethyl carbonate (DMC), diethyl carbonate (DEC), dipropyl carbonate (DPC), methyl propyl carbonate (MPC), ethylene propyl carbonate (EPC), ethyl methyl carbonate (MEC), ethylene carbonate (EC), propylene carbonate (PC), or butylene carbonate (BC). Esters include, but are not limited to, at least one of butyrolactone (BL), decalactone, valerolactone (BL), mevalonolactone, caprolactone (BC), methyl acetate, ethyl acetate or n-propyl acetate. The ether includes, but is not limited to, dibutyl ether. The ketone includes, but is not limited to, polymethyl vinyl ketone.

In the preparation of the graphite anode material 100 in the present disclosure, generally, spherical natural graphite is obtained by spheroidizing and pulverizing flake graphite, and there are a large number of gaps inside. For other methods such as modifying spherical natural graphite by coating the outer surface, during the cycling process, the electrolyte may gradually permeate into the internal gaps, causing side reactions. The SEI film generated at the internal gaps is constantly broken and repaired, and the organic molecules in the electrolyte are co-embedded, resulting in the delamination and destruction of the graphite interlayer structure, high expansion rate and continuous attenuation of the capacity.

In the preparation method provided by the present disclosure, in terms of the process of mixing graphite and filler, and then performing operations such as pulverization to obtain a graphite powder body, spheroidizing natural graphite, mixing and coating spherical graphite and filler, and filling the filler in the internal gap of the spherical graphite are carried out at the same time, which reduces the turnover and residual loss of the material, thereby achieving a simple process and a high production efficiency. Natural graphite and the filler are mixed together for pulverization and spheroidization, so that a large number of gap defects in a single flake graphite pulverized and spheroidized can be eliminated, thereby forming an internal dense structure. Meanwhile, the graphitizing filler forms a carbon coating layer 140 on the surface of the natural graphite core 120 to form an external coating structure, which cooperates with the dense structure of the graphite to reduce the expansion rate of the material and makes the electrode have more excellent cycling performance, thereby having an advantage of excellent overall performance.

The graphite anode material provided by the present disclosure has the advantages of small expansion, good cycling, thereby having excellent overall performance.

In order to make objectives, technical solutions, and advantages of the embodiments of the present disclosure clearer, the technical solutions of the embodiments of the present disclosure will be described clearly and completely below. If specific conditions are not indicated in the Examples, it shall be carried out in accordance with the conventional conditions or the conditions recommended by the manufacturer. The reagents or instruments used without the manufacturer's indication are all conventional products that can be purchased on the market.

**Example**

Typical but non-limiting Examples of the present disclosure are as follows.

Example 1

In this Example, a graphite anode material was prepared according to following method.

Natural flake graphite (D50 is 70 $\mu$m) and petroleum pitch (softening point is 120°C, D50 is 5 $\mu$m) in a mass of 10:1 used as raw materials were mechanically and physically mixed for 35 min, and then were added in a mechanical pulverizer together to perform a pulverizing-spheroidizing treatment, spherical graphite having D50 of 8 $\mu$m was obtained, and then the spherical graphite material prepared was graphitized under nitrogen atmosphere at 3200°C for 10 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 8 $\mu$m, and the carbon coating layer has a thickness of 40 nm.

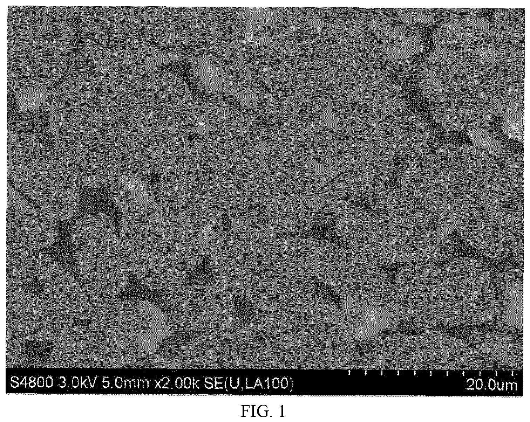

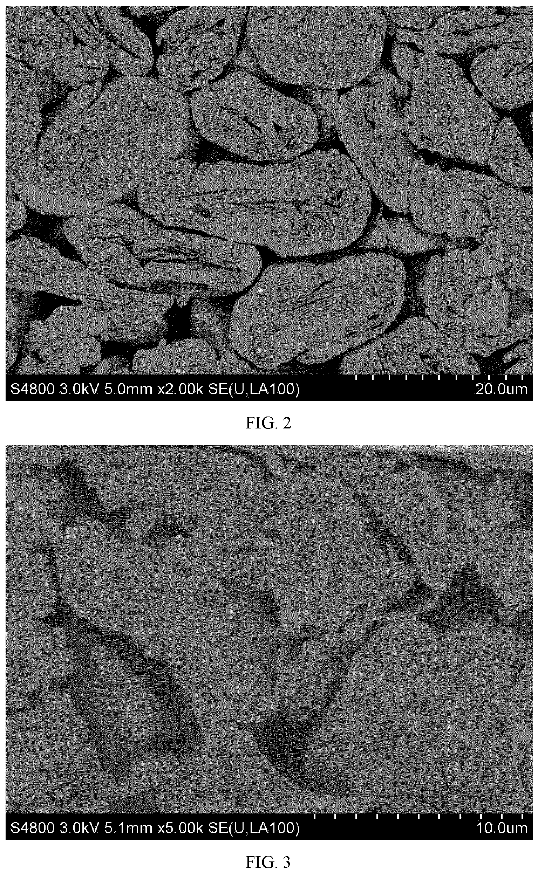

FIG. 1 is a SEM section test photograph of a graphite anode material prepared in this example of the present disclosure. It can be seen from this drawing that the interior of the natural spherical graphite has been completely filled and compacted with pitch, and the outer surface layer has formed a uniform coating layer. It should be noted that the scanning electron micrographs of the graphite anode materials prepared in Examples 2-8 of the present disclosure are similar to that in Example 1, which all realize the completely compact filling of the internal gaps of the natural spherical graphite by the filler and the uniform carbon layer coating on the outside. Compared with FIG. 1, FIG. 2 shows spherical graphite made of natural flake graphite only by spheroidization (without filler mixing), it can be seen that the gaps in the graphite material are clearly visible.

Example 2

In this Example, a graphite anode material was prepared according to following method.

Natural flake graphite (D50 is 70μm) and petroleum pitch (softening point is 180°C, D50 is 3μm) in a mass of 10:1 used as raw materials were mechanically and physically mixed for 40 min, and then were added in a mechanical pulverizer together to perform a pulverizing-spheroidizing treatment, spherical graphite having D50 of 8μm was obtained, and then the spherical graphite material prepared was graphitized under nitrogen atmosphere at 3000°C for 24 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 8 μm, and the carbon coating layer has a thickness of 60 nm.

Example 3

In this Example, a graphite anode material was prepared according to following method.

Natural flake graphite (average particle size D50 is 120μm) and petroleum pitch (softening point is 250°C, D50 is 2μm) in a mass of 10:2 used as raw materials were mechanically and physically mixed for 40 min, and then were added in a mechanical pulverizer together to perform a pulverizing-spheroidizing treatment, spherical graphite having D50 of 17μm was obtained, and then the spherical graphite material prepared was graphitized under nitrogen atmosphere at 2800°C for 36 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 17 μm, and the carbon coating layer has a thickness of 80 nm.

Example 4

In this Example, a graphite anode material was prepared according to following method.

Natural flake graphite (average particle size D50 is 120μm) and petroleum pitch (softening point is 120°C, D50 is 5μm) in a mass of 10:2 used as raw materials were mechanically and physically mixed, and then were added in a mechanical pulverizer together to perform a pulverizing-spheroidizing treatment, spherical graphite having D50 of 17μm was obtained, and then the spherical graphite material prepared was graphitized under nitrogen atmosphere at 3200°C for 10 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 17 μm, and the carbon coating layer has a thickness of 80 nm.

Example 5

In this Example, a graphite anode material was prepared according to following method.

Natural flake graphite (average particle size D50 is 150μm) and petroleum pitch (softening point is 180°C, D50 is 3μm) in a mass of 10:3 used as raw materials were mechanically and physically mixed for 45 min, and then were added in a mechanical pulverizer together to perform a pulverizing-spheroidizing treatment, spherical graphite having D50 of 23μm was obtained, and then the spherical graphite material prepared was graphitized under nitrogen atmosphere at 3000°C for 24 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 23 μm, and the carbon coating layer has a thickness of 100 nm.

Example 6

In this Example, a graphite anode material was prepared according to following method.

Natural flake graphite (average particle size D50 is 150$\mu$m) and petroleum pitch (softening point is 250°C, D50 is 2$\mu$m) in a mass of 10:3 used as raw materials were mechanically and physically mixed for 45 min, and then were added in a mechanical pulverizer together to perform a pulverizing-spheroidizing treatment, spherical graphite having D50 of 23$\mu$m was obtained, and then the spherical graphite material prepared was graphitized under nitrogen atmosphere at 2800°C for 36 h. Finally, the material was sieved, and undersieves were collected to obtain a final product of a graphite anode material.

The graphite anode material provided by this example includes a natural graphite core and a carbon coating layer coated on the surface of the natural core. The defects of pores inside the natural graphite core are filled with graphitized pitch. The natural graphite core has no gap defects, and the carbon coating layer is formed by graphitization of pitch. The graphite core has a D50 of 23 $\mu$m, and the carbon coating layer has a thickness of 100 nm.

Example 7

In this Example, a graphite anode material was prepared according to following method.

Natural flake graphite (average particle size D50 is 10$\mu$m) and coal pitch (softening point is 250°C, D50 is 2$\mu$m) in a mass of 10:0.5 used as raw materials were mechanically and physically mixed for 35 min, and then were added in a mechanical pulverizer together to perform a pulverizing-spheroidizing treatment, spherical graphite having D50 of 8$\mu$m was obtained, and then the spherical graphite material prepared was graphitized under nitrogen atmosphere at 3300°C for 10 h. Finally, the material was sieved, and undersieves were collected to obtain a final product of a graphite anode material.

The graphite anode material provided by this example includes a natural graphite core and a carbon coating layer coated on the surface of the natural core. The defects of pores 122 inside the natural graphite core 120 are filled with graphitized pitch. The natural graphite core has no gap defects, and the carbon coating layer 140 is formed by graphitization of pitch. The graphite core 120 has a D50 of 8 $\mu$m, and the carbon coating layer 140 has a thickness of 10 nm.

Example 8

In this Example, a graphite anode material 100 was prepared according to following method.

Natural flake graphite (average particle size D50 is 100$\mu$m) and phenolic resin in a mass of 10:2 used as raw materials were mechanically and physically mixed for 40 min, and then were added in a mechanical pulverizer together to perform a pulverizing-spheroidizing treatment, spherical graphite having D50 of 25$\mu$m was obtained, and then the spherical graphite material prepared was graphitized under nitrogen atmosphere at 2000°C for 72 h. Finally, the material was sieved, and undersieves were collected to obtain a final product of a graphite anode material.

The graphite anode material provided by this example includes a natural graphite core 120 and a carbon coating layer coated on the surface of the natural core 120. The defects of pores 122 inside the natural graphite core 120 are filled with graphitized phenolic resin. The natural graphite core has no gap defects, and the carbon coating layer 140 is formed by graphitization of phenolic resin. The graphite core 120 has a D50 of 25 $\mu$m, and the carbon coating layer 140 has a thickness of 80 nm.

Comparative Example 1

Natural flake graphite (average particle size D50 is 70$\mu$m) used as raw materials was added in a mechanical pulverizer to perform a pulverizing-spheroidizing treatment, spherical graphite having D50 of 8$\mu$m was obtained. The spherical graphite prepared was mixed with petroleum pitch (softening point is 120°C, D50 is 5$\mu$m) in a mass of 10:1 for 35 min, and then the mixed powder bodies were graphitized at 3200°C for 10 hours. Finally, the material was sieved, and undersieves were collected to obtain a final product of a graphite anode material. (That is, this Example is the same as Example 1 except that natural flake graphite is pulverized and then mixed with pitch).

The graphite anode material provided by this example includes a natural graphite core and a coating layer coated on the surface of the graphite core. There are no fillers in the defects of pores in the graphite core, and the coating layer is a carbon structure layer formed by graphitization of pitch. The graphite core has a D50 of 8 $\mu$m, and the coating layer has a thickness of 45 nm.

FIG. 3 is a SEM section test photograph of a graphite anode material prepared in Comparative Example 1 of the present disclosure. It can be seen from this drawing that only a small part of the gaps in the natural spherical graphite are filled with pitch, and most of the gaps are not filled with pitch, and the gaps are still clearly visible. Obviously, the graphite anode material has not been filled densely.

Comparative Example 2

Natural flake graphite (average particle size D50 is 120μm) used as raw materials was added in a mechanical pulverizer to perform a pulverizing-spheroidizing treatment, spherical graphite having D50 of 17μm was obtained. The spherical graphite prepared was mixed with petroleum pitch (softening point is 250°C, D50 is 2μm) in a mass of 10:2 for 40 min, and then the mixed powder bodies were graphitized at 2800°C for 36 hours. Finally, the material was sieved, and undersieves were collected to obtain a final product of a graphite anode material. (That is, this Example is the same as Example 3 except that natural flake graphite is pulverized and then mixed with pitch).

The graphite anode material provided by this example includes a natural graphite core and a coating layer coated on the surface of the graphite core. There are no fillers in the defects of pores in the graphite core, and the coating layer is a carbon structure layer formed by graphitization of pitch. The graphite core has a D50 of 17 μm, and the coating layer has a thickness of 65 nm.

Comparative Example 3

Natural flake graphite (average particle size D50 is 150μm) used as raw materials was added in a mechanical pulverizer to perform a pulverizing-spheroidizing treatment, spherical graphite having D50 of 23μm was obtained. The spherical graphite prepared was mixed with petroleum pitch (softening point is 250°C, D50 is 2μm) in a mass of 10:3 for 45min, and then the mixed powder bodies were graphitized at 2800°C for 36 hours. Finally, the material was sieved, and undersieves were collected to obtain a final product of a graphite anode material. (That is, this Example is the same as Example 6 except that natural flake graphite is pulverized and then mixed with pitch).

The graphite anode material provided by this example includes a natural graphite core and a coating layer coated on the surface of the graphite core. There are no fillers in the defects of pores in the graphite core, and the coating layer is a carbon structure layer formed by graphitization of pitch. The graphite core has a D50 of 23 μm, and the coating layer has a thickness of 110 nm.

**Test Example**

**Test Example 1: Battery performance test**

Battery performance test (1)

I. Preparation of coin electrode plate:

The graphite anode materials prepared in Examples or Comparative Examples used as anode active substances, CMC (carboxymethyl cellulose), and SBR (styrene butadiene rubber) in a mass ratio of 96.5:1.5:2 was mixed uniformly, and then mixed with a solvent to coat on a copper foil anode current collector, the compaction density of the above material was controlled to be $1.4 \pm 0.1$ g/cm$^3$, and then was dried to obtain anode plate for use.

The electrode plates obtained were assembled in a coin battery, in which the battery was assembled in an argon glove box (Braun glove box), a lithium metal sheet was used as an anode, and the electrolyte 260 is LiPF$_6$+EC(ethylene carbonate)+EMC(methyl ethyl carbonate) (1:1:1 of a volume ratio) of 1 mol/L, the diaphragm 280 was a polyethylene/propylene composite microporous membrane.

II. Battery performance test

(1) First delithiation specific capacity (mAh/g) (i.e., Q1 $_{(dis)}$) test of coin batteries:

$$Q_{1\,(cha)} = C_{1\,(cha)}/m \text{ (Formula 1)}$$

$Q_{1\,(dis)}$: the first discharge specific capacity when charging and discharging was performed at a current of 0.1C, (mAh/g);
$C_{1\,(dis)}$: the first discharge capacity when charging and discharging was performed at a current of 0.1C, (mAh);
$m$: mass of active substance, (g);

(2) Test of the first efficiency of coin battery (%) (i.e., the first Coulomb efficiency, E$_1$):

$$E_1 = Q_{1\,(\mathrm{dis})} / Q_{1\,(\mathrm{cha})} \times 100\% \text{ (Formula 2)}$$

$Q_{1\,(\mathrm{cha})}$: the first charge specific capacity when charging and discharging was performed at a current of 0.1C, (mAh/g);
$C_{1\,(\mathrm{cha})}$: the first charge capacity when charging and discharging was performed at a current of 0.1C, (mAh);
(Referring to formula D.3 of "Silicon Carbon" GB/T 38823-2020);

The electrochemical performance is carried out on a battery test instrument (CT2001A, LAND battery test system of Wuhan Jinnuo Electronics Co., Ltd.), the charging and discharging voltage is 0.01V to 1.5V, the charge and discharge rate is 0.1C, the first capacity and first efficiency obtained from the test are listed in the table 1. Under the conditions of charging and discharging at 0.1C in the first week, charging and discharging at 0.2C in the second week, and charging and discharging at 0.5C in following, the 50-cycle expansion rate of the coin battery was tested.

Battery performance test (2)

I. Preparation of lithium-ion battery

As shown in FIG. 5, the natural graphite-based composite material obtained from the graphite anode material 100 prepared in Examples or Comparative Examples, a conductive agent, CMC and SBR at a mass ratio of 95:1.5:1.5:2 were mixed, and then mixed with a solvent to coat on a copper foil anode current collector 242, the compaction density of the above material was controlled to be $1.4\pm0.1$ g/cm$^3$, and then was dried to obtain electrode plates of anode 240. The anode active material layer 244 is formed on the upper layer of the electrode plates of anode 240. Positive electrode active material LiCoO$_2$, a conductive agent, and PVDF in a mass ratio of 96.5:2:1.5 are mixed uniformly, and then mixed with a solvent to coat on an aluminum foil positive current collector. The compacted density of the material is controlled to be $1.4\pm0.1$ g/cm$^3$, obtaining electrode plates of positive electrode 220. The electrolyte 260 is LiPF6+EC+EMC (volume ratio of 1:1:1) of 1 mol/L, the separator 280 is a polyethylene/propylene composite microporous membrane, and is assembled with the shell 290 to prepare a lithium ion battery 200.

II. Electrochemical performance test

A calculation formula for the 1000-cycle capacity retention rate of a full battery at room temperature is:

$$\text{the 1000-cycle capacity retention rate of the full battery at room temperature (\%)} =$$

$$C_{1000\,(\mathrm{dis})} / C_{1\,(\mathrm{dis})} \times 100\% \qquad \text{(Formula 3)};$$

$C_{100\,(\mathrm{dis})}$: the 100$^{\text{th}}$ discharge capacity when charging and discharging was performed at a current of 0.1C, (mAh);
The test of electrochemical performance was carried out on a battery test instrument (CT2001A, LAND battery test system from Wuhan Jinnuo Electronics Co., Ltd.), charged and discharged at room temperature at a rate of 1C, and a voltage was ranged from 3.0 V to 4.25V. The cycling performance tested was listed in Table 1.

Battery performance test (3)

Electrochemical performance test:

50-cycle expansion rate: 1. an anode plate was prepared according to the method in the battery performance test (2), lithium cobalt oxide was used as a positive electrode plate, the positive electrode plate has an area density of $16\pm1$mg/cm$^3$, and a compaction density of 3.5g /cc. The anode plate has an area density of $7\pm1$mg/cm$^3$; 2. the positive and anode plates were assembled in an in-situ test abrasive tool into a monolithic battery; 3. charge and discharge cycles were performed on the assembled battery, and the test data was recorded in situ. 4. the expansion rate was calculated according to the test data, a calculation formula is:

$$\text{expansion rate} = \text{a thickness change of an electrode plate/an original thickness of the}$$

$$\text{electrode plate} \times 100\% \qquad \text{(Formula 4)}$$

The electrochemical performance test was carried out on a battery test instrument (CT2001A, LAND battery test system from Wuhan Jinnuo Electronics Co., Ltd.), charging and discharging were performed at room temperature at a rate of 1C, a voltage was ranged from 3.0 V to 4.25 V, total 50 cycles were performed, and 50-cycle expansion rate was listed in Table 1.

Table 1

| Sample | First delithiation capacity of coin battery ( mAh/g ) | First efficiency of coin battery ( % ) | 50-cycle expansion rate of coin battery ( % ) | 1000-cycle Capacity retention rate of full battery at room temperature ( % ) |
|---|---|---|---|---|
| Example 1 | 365.4 | 95.7 | 16.5 | 92.8 |
| Example 2 | 364.2 | 95.6 | 16.7 | 92.3 |
| Example 3 | 362.1 | 95.4 | 18.5 | 92.0 |
| Example 4 | 362.5 | 95.6 | 17.6 | 92.4 |
| Example 5 | 358.9 | 95.3 | 17.1 | 92.5 |
| Example 6 | 358.5 | 95.7 | 19.6 | 90.2 |
| Example 7 | 359.5 | 95.3 | 19.6 | 90.4 |
| Example 8 | 357.8 | 94.8 | 18.3 | 91.3 |
| Comparative Example 1 | 363.8 | 72.5 | 33.4 | 77.9 |
| Comparative Example 2 | 361.3 | 73.4 | 34.2 | 78.2 |
| Comparative Example 3 | 358.2 | 73.7 | 31.7 | 76.8 |

Test Example 2: Performance test of graphite anode material

(1) Measurement of O/C value of graphite anode material

Test Methods:

The O/C value is an atomic concentration ratio O/C of O and C obtained from the spectral peak area of Cls and Ols according to X-ray photoelectron spectroscopy (XPS), that is, an atomic concentration of O/an atomic concentration of C.

An operation method is as follows. The graphite anode material samples prepared in the foregoing Examples 1-8 and Comparative Examples 1-3 were placed into a vacuum drying oven at 120°C for 12 hours to remove moisture and volatiles in the samples, and its elemental composition and content were then characterized through an X-ray photoelectron spectrometer (XPS, model ESCALAB 250Xi). According to the spectra peak areas of Cls and Ols in the XPS characterization results, an atomic concentration ratio of O to C, that is, an O/C value, can be obtained.

The experimental results are shown in Table 2 below.

Table 2

| Sample | XPS | | |
|---|---|---|---|
| | C (at%) | O (at%) | O/C value |
| Example 1 | 97.22 | 2.78 | 0.029 |
| Example 2 | 97.31 | 2.69 | 0.028 |
| Example 3 | 96.96 | 3.04 | 0.031 |
| Example 4 | 97.37 | 2.63 | 0.027 |
| Example 5 | 96.88 | 3.12 | 0.032 |

(continued)

| Sample | XPS | | |
|---|---|---|---|
| | C (at%) | O (at%) | O/C value |
| Example 6 | 96.44 | 3.56 | 0.037 |
| Example 7 | 97.34 | 2.66 | 0.027 |
| Example 8 | 96.39 | 3.61 | 0.037 |
| Comparative Example 1 | 93.89 | 6.11 | 0.065 |
| Comparative Example 2 | 91.43 | 8.57 | 0.094 |
| Comparative Example 3 | 90.92 | 9.08 | 0.100 |

(2) Pore size test of graphite anode material

Test Method:

The graphite anode material samples prepared in the foregoing Examples 1-8 and Comparative Examples 1-3 were placed in a vacuum drying oven and dried at 120°C for 12 hours to remove moisture and adsorbed gas in the sample, and then the nitrogen absorption and desorption isotherm of the sample was tested by a specific surface area and porosity analyzer (model ASAP 2460), and then the BJH model (Barrett-Joyner-Halenda) was fitted to obtain the pore volume and pore size distribution data of the sample. The ratio of macro-pores is a ratio of the volume of pores with a pore diameter of 50nm or more to a volume of all pores of the sample.

The experimental results are shown in Table 3 below.

Table 3

| Sample | Pore size distribution | | |
|---|---|---|---|
| | Pore volume (cm$^3$/g) | Macropore volume (>50nm) (cm$^3$/g) | Macropore ratio |
| Example 1 | 0.00671 | 0.00579 | 86.32% |
| Example 2 | 0.00646 | 0.00559 | 86.51% |
| Example 3 | 0.00578 | 0.00464 | 80.20% |
| Example 4 | 0.00612 | 0.00503 | 82.13% |
| Example 5 | 0.00634 | 0.00543 | 85.62% |
| Example 6 | 0.00647 | 0.00546 | 84.40% |
| Example 7 | 0.00952 | 0.00854 | 89.67% |
| Example 8 | 0.00717 | 0.00638 | 89.02% |
| Comparative Example 1 | 0.01132 | 0.01071 | 94.64% |
| Comparative Example 2 | 0.09567 | 0.08982 | 93.89% |
| Comparative Example 3 | 0.01073 | 0.01022 | 95.21% |

Based on the foregoing Examples and Comparative Examples, it can be seen that the preparation methods of the graphite anode material 100 provided in Examples 1-8 of the present disclosure simultaneously perform spheroidization of natural graphite, mixing and coating of spherical graphite and fillers, and filling in the internal gaps of spherical graphite by fillers, thereby reducing material turnover and residual loss, and achieving simple process and high production efficiency. Natural graphite and the filler are mixed together for pulverization and spheroidization, so that a large number of gap defects in a single flake graphite pulverized and spheroidized can be eliminated, thereby realizing efficiently and densely filling the gaps in the graphite core to form an internal dense structure. Compared with the graphite materials in the Comparative Examples, the pore volume of the graphite anode materials prepared by the present disclosure is significantly reduced, the volume ratio of macro-pores is reduced, and the expansion rate of the product is smaller. In addition, after graphitization, compared with the material prepared in the Comparative Example, the graphite anode materials of the present disclosure have reduced oxygen-containing functional groups on the surface, significantly reduced O/C value, and reduced side reactions during the cycling process, thereby being beneficial to improve the cycling performance of materials. In the electrode performance test of this Example, the expansion rate remained low after 50 cycles, the cycling performance was good, and the 1000-cycle capacity retention rate of the full battery was higher at room temperature, and was maintained at a high level, thereby having excellent overall performance.

In Comparative Example 1 relative to Example 1, Comparative Example 2 relative to Example 3, and Comparative Example 3 relative to Example 6, natural graphite was firstly spheroidized, and then spherical graphite and filler were mixed to coat, and the internal gaps of spherical graphite was filled by the filler, since these three operations were not performed simultaneously, this causes the filler was simply coated on the surface of graphite and cannot entered the internal gaps of the graphite, and there are still defects in the structure, so that the expansion rate of the products of Comparative Examples 1-3 was significantly increased, and the cycling performance is greatly reduced.

The applicant declares that the present disclosure uses the above Examples to illustrate the detailed methods of the present disclosure, but the present disclosure is not limited to the above detailed methods, which does not mean that the present disclosure must rely on the above detailed methods to be implemented. Those skilled in the art should understand that any improvements to the present disclosure, the equivalent replacement of the raw materials of the products of the present disclosure, the addition of auxiliary components, the selection of addition manners, and the like, fall within the protection scope and disclosure scope of the present disclosure.

**Industrial applicability**

In summary, the present disclosure provides a graphite anode material, an anode, and a lithium ion battery and preparation methods thereof. The graphite anode material forms an internal dense structure, and during the application process of the electrode, the product has the advantages of small expansion, good cycling, and excellent overall performance. The preparation method simultaneously perform spheroidization of natural graphite, mixing and coating of spherical graphite and fillers, and filling in the internal gaps of spherical graphite by fillers, thereby reducing material turnover and residual loss, and achieving simple process and high production efficiency. Meanwhile, the anode and battery prepared have the advantages of high first efficiency and good cycling performance.

**Claims**

1. A graphite anode material (100), comprising:

   a natural graphite core (120), having pores (122) therein;
   a carbon coating layer (140), formed on a surface of the natural graphite core (120); and
   a graphitizing filler, filled in the pores (122) inside the natural graphite core (120), wherein the graphitizing filler further forms the carbon coating layer (140).

2. A graphite anode material, comprising:

   a natural graphite core (120), having pores (122) therein, wherein the pores are filled with a graphite material;
   a carbon coating layer (140), formed on a surface of the natural graphite core (120);
   wherein the graphite material and the carbon coating layer (140) are both formed by graphitizing a filler to obtain a graphitizing filler.

3. The graphite anode material (100) according to claim 1 or 2, wherein the graphite anode material satisfies at least one of following conditions a to d:

   a. the natural graphite core (120) has a median particle size ranging from 8 $\mu$m to 25 $\mu$m;
   b. the carbon coating layer (140) has a thickness ranging from 10 nm to 100 nm;
   c. the pores (122) have a pore volume ranging from 0.01 $cm^3$/g to 0.08 $cm^3$/g; and
   d. based on 100% of a total mass of the graphitizing filler, the content of the graphitizing filler filled in the pores (122) inside the natural graphite core (120) ranges from 20% to 80%.

4. The graphite anode material (100) according to any one of claims 1 to 3, wherein the graphite anode material satisfies at least one of following conditions a to c:

   a. the graphite anode material (100) has an average pore volume ranging from 0.005 $cm^3$/g to 0.010 $cm^3$/g;

b. a ratio of the macro-pores of the graphite anode material (100) ranges from 80% to 90%, and the pore diameter of the macro-pores is greater than or equal to 50 nm; and

c. an O/C ratio of the oxygen atomic concentration to the carbon atomic concentration of the graphite anode material (100) ranges from 0.02 to 0.04.

5. The graphite anode material (100) according to any one of claims 1 to 4, wherein the filler comprises at least one of pitch, resin, grease, alkanes, alkenes, alkynes and aromatic hydrocarbons.

6. A method for preparing a graphite anode material (100), wherein the method comprises following steps:

mixing natural graphite with a filler to obtain a mixture;
pulverizing and spheroidizing the mixture to obtain a graphite powder body filled with the filler; and
graphitizing the graphite powder body to obtain the graphite anode material (100).

7. The method according to claim 6, wherein the natural graphite comprises natural flake graphite; and/or the natural graphite has a median particle size ranging from 10 $\mu$m to 150 $\mu$m.

8. The method according to claim 6 or 7, wherein the filler comprises an organic carbon source with a residual carbon value of 10% to 90% by mass, which is able to be melted into liquid at 60°C to 350°C.

9. The method according to claim 8, wherein the organic carbon source comprises at least one of pitch, resin, grease, alkanes, alkenes, alkynes and aromatic hydrocarbons.

10. The method according to claim 8 or 9, wherein the method satisfies at least one of following conditions a to d:

a. the filler has a particle size ranging from 0.5 $\mu$m to 10 $\mu$m;
b. the pitch includes at least one of petroleum pitch, coal pitch, meso-phase pitch and modified pitch;
c. the pitch has a median particle size ranging from 1 $\mu$m to 10 $\mu$m; and
d. the resin comprises phenolic resin and/or epoxy resin.

11. The method according to any one of claims 6 to 10, wherein the method satisfies at least one of following conditions a to c:

a. a mass ratio of the natural graphite to the filler is 10: (0.5-3);
b. the graphite powder body has a median particle size ranging from 8$\mu$m to 25$\mu$m;
c. the graphite powder body is a spherical graphite powder body.

12. The method according to any one of claims 6 to 11, wherein the graphitizing is performed under a protective atmosphere, and the protective atmosphere comprising an atmosphere excluding an oxygen environment; and/or

the graphitizing is performed under a protective atmosphere, and the protective atmosphere comprises at least one of a nitrogen atmosphere and an argon atmosphere; and/or
the temperature of the graphitizing treatment ranges from 2000°C to 3300°C, and the time ranges from 10 h to 72 h.

13. The method according to any one of claims 6 to 12, wherein the method further comprises: dispersing and sieving the product obtained by the graphitizing treatment.

14. The method according to any one of claims 6 to 13, wherein the method comprises following steps:

physically mixing natural flake graphite with a median particle size ranging from 10 $\mu$m to 150 $\mu$m and pitch with a median particle size ranging from 1 $\mu$m to 10 $\mu$m at a mass ratio of 10: (0.5-3) to obtain a mixture;
pulverizing and spheroidizing the mixture to obtain a spherical graphite powder body with a median diameter ranging from 8 $\mu$m to 25 $\mu$m; and
graphitizing the spherical graphite powder body under a protective atmosphere at a temperature ranging from 2000°C to 3300°C for 10 h to 72 h to obtain the graphite anode material (100).

15. A lithium ion battery (200) comprising a graphite anode material (100) according to any one of claims 1 to 5 or a graphite anode material (100) prepared by the method according to any one of claims 6-14.

FIG. 1

S4800 3.0kV 5.0mm x2.00k SE(U,LA100)    20.0um

FIG. 2

S4800 3.0kV 5.1mm x5.00k SE(U,LA100)    10.0um

FIG. 3

FIG. 4

FIG. 5

FIG. 6

## INTERNATIONAL SEARCH REPORT

| International application No. |
| --- |
| **PCT/CN2021/117482** |

**A. CLASSIFICATION OF SUBJECT MATTER**

C01B 32/21(2017.01)i; H01M 4/587(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M;C01B

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 负极, 天然石墨, 鳞片石墨, 孔隙, 包覆层, 石墨化, 填充, battery, negative electrode, natural graphite, flake graphite, pore, coated layer, graphitization, fill

**C. DOCUMENTS CONSIDERED TO BE RELEVANT**

| Category* | Citation of document, with indication, where appropriate, of the relevant passages | Relevant to claim No. |
| --- | --- | --- |
| X | CN 107814382 A (GUANGDONG DONGDAO NEW ENERGY CO., LTD. et al.) 20 March 2018 (2018-03-20) description paragraphs 8-95, figure 1 | 1-15 |
| X | CN 107814383 A (GUANGDONG DONGDAO NEW ENERGY CO., LTD. et al.) 20 March 2018 (2018-03-20) description, paragraphs 4-100 | 1-15 |
| X | CN 108063229 A (SHENZHEN BTR NEW ENERGY MATERIALS CO., LTD.) 22 May 2018 (2018-05-22) description, paragraphs 8-15, 94-95 | 1-15 |
| X | CN 111463416 A (GUANGDONG DONGDAO NEW ENERGY CO., LTD. et al.) 28 July 2020 (2020-07-28) description paragraphs 4-66, figure 1 | 1-15 |
| X | CN 107403917 A (ZHONGNAN DIAMOND CO., LTD.) 28 November 2017 (2017-11-28) description paragraphs 6-74 | 1-15 |
| X | WO 2020149683 A1 (LG CHEMICAL LTD) 23 July 2020 (2020-07-23) description paragraphs 30-119 | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 October 2021** | **25 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2021/117482** |

**C.    DOCUMENTS CONSIDERED TO BE RELEVANT**

| Category* | Citation of document, with indication, where appropriate, of the relevant passages | Relevant to claim No. |
|---|---|---|
| A | KR 20140085767 A (POSCO et al.) 08 July 2014 (2014-07-08)<br>        entire document | 1-15 |
| A | CN 108832091 A (SHENZHEN BTR NEW ENERGY MATERIALS CO., LTD.) 16 November 2018 (2018-11-16)<br>        entire document | 1-15 |

**INTERNATIONAL SEARCH REPORT**
Information on patent family members

International application No.

**PCT/CN2021/117482**

| Patent document cited in search report | | | Publication date (day/month/year) | Patent family member(s) | | | Publication date (day/month/year) |
|---|---|---|---|---|---|---|---|
| CN | 107814382 | A | 20 March 2018 | CN | 107814382 | B | 10 December 2019 |
| CN | 107814383 | A | 20 March 2018 | CN | 107814383 | B | 14 January 2020 |
| CN | 108063229 | A | 22 May 2018 | KR | 20200092371 | A | 03 August 2020 |
| | | | | US | 2020266443 | A1 | 20 August 2020 |
| | | | | WO | 2019114554 | A1 | 20 June 2019 |
| | | | | JP | 2020510972 | A | 09 April 2020 |
| | | | | EP | 3726629 | A1 | 21 October 2020 |
| CN | 111463416 | A | 28 July 2020 | None | | | |
| CN | 107403917 | A | 28 November 2017 | None | | | |
| WO | 2020149683 | A1 | 23 July 2020 | EP | 3863090 | A1 | 11 August 2021 |
| | | | | KR | 20200090128 | A | 28 July 2020 |
| KR | 20140085767 | A | 08 July 2014 | KR | 101459729 | B1 | 10 November 2014 |
| CN | 108832091 | A | 16 November 2018 | KR | 20200142552 | A | 22 December 2020 |
| | | | | US | 2021107795 | A1 | 15 April 2021 |
| | | | | WO | 2019237758 | A1 | 19 December 2019 |
| | | | | EP | 3790082 | A1 | 10 March 2021 |
| | | | | JP | 2021521611 | A | 26 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020109472554